(19) Europäisches Patentamt
European Patent Office
Office européen des brevets

(11) Publication number : **0 485 224 A2**

# (12) EUROPEAN PATENT APPLICATION

(21) Application number : **91310331.3**

(51) Int. Cl.[5] : **C09K 9/02,** G02F 1/15

(22) Date of filing : **07.11.91**

(30) Priority : **07.11.90 US 610409**

(43) Date of publication of application :
**13.05.92 Bulletin 92/20**

(84) Designated Contracting States :
**DE FR GB IT**

(71) Applicant : **DONNELLY CORPORATION**
**414 East Fortieth Street**
**Holland Michigan 49423 (US)**

(72) Inventor : **Varaprasad, Desaraju Venkatapanduranga**
**314 Jennifer Lane**
**Holland, Michigan 49423 (US)**
Inventor : **Lynam, Niall Richard**
**248 Foxdown**
**Holland, Michigan 49424 (US)**
Inventor : **Habibi, Hamid Reza**
**2630 Knagspough**
**Holland, Michigan 49424 (US)**
Inventor : **Desaraju, Padma**
**314 Jennifer Lane**
**Holland, Michigan 49423 (US)**

(74) Representative : **Sheard, Andrew Gregory et al**
**Kilburn & Strode 30, John Street**
**London WC1N 2DD (GB)**

## (54) Polyether-containing electrochemichromic solutions.

(57) Electrochemichromic solutions and devices are disclosed which have 0.5 percent by volume of at least one polyether which is soluble in the electrochemichromic solution to reduce segregation without unduly affecting leakage current.

EP 0 485 224 A2

The present invention relates to electrochemichromic solutions and devices containing them. Such solutions are well-known and are designed to either colour or clear, depending on desired application, under the influence of applied voltage.

Such devices have been suggested for use as rearview mirrors in automobiles so that in night driving conditions, application of a voltage would darken a solution contained in a cell incorporated into the mirror (U.S. Patent 3,280,701, October 25, 1966). Similarly, it has been suggested that windows incorporating such cells could be darkened to block out sunlight, and then allowed to lighten again at night. Electrochemichromic cells have been used as display devices and have been suggested for use as antidazzle and fog-penetrating devices in conjunction with motor vehicle headlamps (British Patent Specification 328017, May 15, 1930).

United States Patent 4,090,782 to Bredfeldt *et al*, United States Patent 4,572,119 to Ueno *et al* (June 1988), chemical Abstract 86:196871c, 72-electro. Chemistry, Vol. 86, 1977, I.V. Shelepin *et al* in Electrokhimya, 13(3), 404-408 (March 1977), O.A. Ushakov et al, Electrokhimya, 14(2), 319-322 (February 1978), U.S.S.R. Patent 566863 to Shelepin (August 1977), U.S. Patent 3,451,741 to Manos, European Patent Publication 240,226 published October 7, 1987 to Byker, United States Patent 3,506,229 to Schoot *et al*, United States Patent 4,093,358 to Shattuck *et al*, European Patent Publication 0012419 published June 25, 1980 to Shattuck and United States Patent 4,139,276 to Clecak *et al* all disclose electrochemichromic solutions of anodic and cathodic electrochromically colouring components which may provide self-erasing, high colour contrast, single compartment cells. Such anodic and cathodic colouring components comprise redox couples selected to exhibit the following reaction:

$$\underset{\text{(Low energy pair)}}{\underset{\text{(Colourless)}}{RED_1 + OX_2}} \; \underset{\text{voltage}}{\overset{\longleftarrow}{\longrightarrow}} \; \underset{\text{(High Energy Pair)}}{\underset{\text{(Coloured)}}{OX_1 + RED_2}}$$

The redox couple is selected such that the equilibrium position of the mixture thereof lies completely to the left of the equation. At rest potential, the anodically colouring reductant species $RED_1$, and the cathodically colouring oxidant species $OX_2$ are colourless. To cause a colour change, voltage is applied and the normally colourless $RED_1$ is anodically oxidized to its coloured antipode $OX_1$, while, simultaneously, $OX_2$ is cathodically reduced to its coloured antipode, $RED_2$. These cathodic/anodic reactions occur preferentially at the electrodes which, in practical devices, are typically transparent conductive electrodes. Within the bulk of the solution, the redox potentials are such that when $RED_2$ and $OX_1$ come together, they revert to their lower energy form.

This means the applied potential need only suffice to drive the above reaction to the right of the above equation. On removing the potential, the system reverts to its low energy state and the cell spontaneously self-erases.

Such redox pairs are usually placed in solution in an inert solvent. Typically, an electrolyte is also added. This solution can then be placed into a relatively thin cell, between two conductive surfaces. In most applications, at least one of the conductive surfaces comprises a very thin layer of a transparent conductor such as indium tin oxide (ITO), doped tin oxide or doped zinc oxide deposited on a glass substrate so that the cell is transparent from at least one side. If the device is to be used in a mirror, the second surface is typically defined by a relatively thin layer of transparent conductor such as indium tin oxide, doped tin oxide or doped zinc oxide deposited on another glass substrate, which is silvered or aluminized or otherwise coated with a reflector on its opposite side. In the case of solar control windows, the second glass substrate would of course not be silvered on its opposite side so that when the redox pair is colourless, the window would be entirely transparent.

A known disadvantage of single-compartment, solution-phase, self-erasing electrochromic devices is exhibited whenever such a device is coloured for an extended period of time, sometimes for as short as 60 seconds but more usually over several minutes or hours. When first bleached by removal of the electrical energy after prolonged operation or colouration, bleaching in the device is often non-uniform. Bands of colour remain adjacent to the electrically conductive bus bars due to voltage gradient induced segregation, a phenomenon related to the depth of colouration associated with maxima in applied electrical potential with resultant potential gradient assisted diffusion of charged molecules. Bands of colouration may also be seen adjacent regions where there exists a significant concentration difference between coloured electrochromic molecules and uncoloured electrochromic molecules. This effect is termed concentration induced coloration segregation and is particularly noticeable when, in the types of devices described above, one region is coloured for a prolonged period while immediately adjacent regions are left uncoloured. Differences in solubilities between the coloured and uncoloured forms of any of the electrochromic species may also contribute to segregation. This form of segregation is particularly noticeable in electrochemichromic devices whose major plane is non-horizontal, such as is

experienced in use with rearview mirrors on automobiles, wall mirrors, building windows, automotive front, rear and side windows and the like. In their coloured form, either or both of the electrochemichromically active species may fully or partially come out of solution, and dependent on their density relative to that of the host solvent, may float or sink.

The effects of coloration segregation in electrochromic devices have both cosmetic and functional disadvantages. Bands of colours seen after extended coloration can be aesthetically displeasing in devices such as rearview mirrors, windows, office partitions, information displays and the like where users may question whether the device is damaged or working properly. In information display devices where regions of the device are coloured while immediately adjacent regions remain uncoloured, the functionality of such devices can be impaired because diffusion of coloured molecules into adjacent uncoloured regions reduces or eliminates lines of demarcation and thus information definition. While this can occur even during the period of prolonged operation, it is particularly evident upon first bleaching after such a period of extended use. To date, these segregation effects have limited the usefulness and commercial success of many electrochromic devices.

Another problem associated with electrochemichromic devices relates to consumer or user safety. Electrochemichromic solutions typically use chemicals of potential consumer or user risk from eye irritation, skin irritation, oral ingestion or the like. Also, these solutions are typically sandwiched between glass elements. Should these glass elements shatter upon impact in an accident, a consumer or user could be exposed to potential risk due to scattering of glass shards, splashing or spillage of electrochemichromic solution or the like. Also, even where the glass elements merely crack during normal usage, such that the electrochemichromic solution held therebetween simply oozes out to the exterior, a potential user contact hazard exists and, further, because such electrochemichromic solutions typically utilize organic solvents, surfaces such as automobile painted body work adjacent or in contact with the electrochemichromic device may suffer damage.

Yet another problem encountered in electrochemichromic devices relates to current leakage. When the electrochemichromic cell is coloured by the application of voltage, the coloured species $OX_1$ and $RED_2$ continually want to recombine and return to their equilibrium, colourless condition. The rate of recombination of the coloured species $OX_1$ and $RED_2$ within the bulk of the solution is directly proportional to their diffusion coefficient in the solvent used. In order to compensate for the tendency of the coloured species to recombine and go to the colourless equilibrium state, current must continually leak into the electrochemichromic solution via the conductive electrodes that typically sandwich such solution.

Since current must flow across the conductive surface of the transparent conductor used on at least one of the substrates that sandwich the electrochemichromic cell, and because these transparent conductors have finite sheet resistance, the applied potential will be highest adjacent to the bus bar connector typically located at an edge perimeter and will be lowest near the centre of the device as current passes across the conductive glass surface to colour remote regions. Thus, if the leakage current is high and/or the sheet resistance of the transparent conductor is high, the potential drop that ensues across the transparent conductor itself results in a lower potential being applied to remote regions. Colouration is therefore nonuniform with the edge regions nearest the bus bar colouring deepest and the central regions colouring lightest.

If the leakage current is low due to a low rate of recombination of the coloured species $OX_1$ and $RED_2$ within the bulk of the solution, deep colouring devices are facilitated and colouration uniformity can be enhanced. However, bleach rate, which is the time taken to return from the full or partial coloured state to the substantially clear, uncoloured state, for low leakage current devices can be slow. Thus, it is advantageous when formulating an electrochemichromic solution to design the leakage current to achieve the commercially desired balance between depth of colouration, colouration uniformity and bleach rate. Also, it is desirable to reduce segregation effects by thickening the solution and to enhance safety and product protection by increasing solution viscosity. However, addition of prior art thickening agents such as acrylic polymers to the prior art solvents or the like, while effective in increasing solution viscosity such that anti-segregation and safety benefits are realized, has the disadvantage of lowering the leakage current of the selected formulation with a concomitant slowing of the device bleach rate. Thus, formulation to a desired device and safety performance is complicated.

Problems such as these have contributed to the failure of electrochemichromic solutions and devices based thereon to achieve the degree of commercial success which they potentially could achieve.

According to a first aspect of the present invention there is provided an electrochemichromic solution comprising a solvent, a redox chemical pair whose colour can be varied by the variation of an applied voltage (if any) and a polyether.

The redox chemical pair may thus have their colour varied by application of an applied voltage (which includes the application of zero voltage). This variation may result in the redox chemical pair being colourless. In a preferred embodiment variation of the applied voltage (which may include application of zero voltage) can change the redox chemical pair from a coloured to a colourless state. In particular, it is preferred that the redox chemical pair colours in the presence of an applied voltage but which bleaches to a colourless condition in the

absence of an applied voltage.

More than one polyether may be provided in the solution. Preferably the polyether will act as a thickener so that the addition of an effective amount of at least one polyether results in the solvent being thickened. The polyether suitably has a molecular weight of from 100,000 to 6,000,000, for example 100,000 to 4,000,000. Suitably the polyether will render the viscosity of the solution not being greater than 600 centistokes at 25°C.

The polyether is suitably a polyalkalene oxide such as a poly($C_{1-5}$)alkylene oxide or a cellulose derivative, such as a hydroxyalkyl cellulose, for example a hydroxy($C_{1-5}$)alkyl cellulose. Suitably the polyether is present at from 0.5 to 10% weight by volume. As previously stated, more than one polyether may be present. For example, the polyether may comprise hydroxypropyl cellulose while the solvent may be thickened by the addition of from 0.5 to 10% weight by volume polyethylene oxide (PEO).

The solvent will suitably comprise 3-hydroxypropionitrile, 2-acetylbutyrolactone, glutaronitrile, 3,3′-oxydipropionitrile, 3-methylsulpholane, 2-methylglutaronitrile and/or propylene carbonate. Any one or more of these compounds may be a substantial component in the solvent.

In the present invention, it has been found that the addition of polyethers (such as polyethylene oxide and polycarbohydrates) to electrochemichromic solutions, while it may result in an increase in solution viscosity, may also be effective in reducing the diffusion controlled segregation without, surprisingly, unduly affecting leakage current values. This is unexpected since the addition of prior art thickeners, especially polymeric thickeners, not only results in an increase in solution viscosity and can aid in reducing the diffusion controlled segregation, but also generally results in a decrease in leakage current, accompanied by a decrease in bleach rate. Thus, the addition of polyethers to electrochemichromic solutions may enable the formulator to mix the electrochemichromic solutions to a desired viscosity without adversely affecting the leakage current and, in turn, the bleach speed. Also, addition of polyethers to electrochemichromic solutions may improve the safety performance because of the increased viscosity of the solutions.

In the accompanying drawings which are intended to exemplify and illustrate (but not limit) the present invention:

Fig. 1 is a section view of an electrochemichromic cell that can contain a prior art electrochemichromic solution or one according to the present invention; and

Figs. 2 and 3 are graphs of leakage current (Amps/$m^2$ ) against solution viscosity.

In the a preferred embodiment, the electrochemichromic solutions of the present invention include a redox chemical pair which colours in the presence of an applied voltage and which bleaches to a colourless condition in the absence of an applied voltage. Usually these will be dissolved in an electrochemichromic solvent system that contains a polyether such as polyethylene oxide or hydroxypropyl cellulose which is soluble in the electrochemichromic solvent system.

The electrochemichromic solutions of the invention can utilize conventional or equivalent redox systems such as a viologen combined with a phenazine, diamine or benzidine. They are suitably dissolved in an appropriate solvent (which encompasses a mixture of solvents) preferably that is or are known to be useful as solvents in the electrochemical art. Such solvents include (or the following may be included as a substantial component) acetonitrile, dimethyl formamide, propylene carbonate, and gamma-butyrolactone. Particularly preferred solvents include 3-hydroxypropionitrile (HPN), 3,3′-oxydipropionitrile (ODPN), glutaronitrile (GNT), 3-methylsulpholane (MS), 2-methylglutaronitrile (MGNT) and 2-acetylbutyrolactone (ABL), or mixtures thereof, in which polyethers are advantageously sufficiently soluble. Electrolytes may optionally be used.

Viologens are preferred cathodic materials for the redox pair. Methylviologen, ethylviologen, benzylviologen and heptylviologen are all satisfactory, with 0.025 to 0.05 molar solutions of the viologen (e.g. methylviologen and ethylviologen) being preferred. Higher concentrations up to the solubility limits are also operable. In the structural formulas set forth below, $X^-$ represents the anion of the viologen salt. Various anions are disclosed in the literature, although it has been discovered that the most preferred anion is hexafluorophosphate ($PF_6^-$) because it surprisingly enhances viologen solubility.

Methylviologen 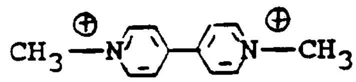 $2X^-$

Ethylviologen 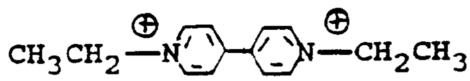 $2X^-$

Benzylviologen 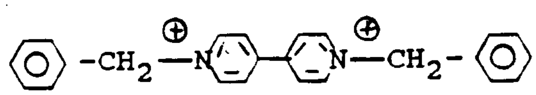 $2X^-$

Heptylviologen 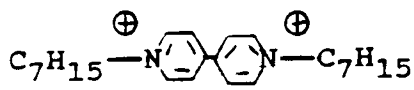 $2X^-$

The hexafluorophosphate counter ion is listed below with other acceptable, though less preferred, counter ions for use with the viologens:

| | |
|---|---|
| Tetrafluoroborate | $BF_4^-$ |
| Perchlorate | $ClO_4^-$ |
| Trifluoromethane sulfonate | $CF_3SO_3^-$ |
| Hexafluorophosphate | $PF_6^-$ |

The preferred anodic colouring materials are set forth below:

DMPA - 5,10-dihydro-5,10-dimethylphenazine $R=CH_3$

DEPA - 5,10-dihydro-5,10-diethylphenazine $R=C_2H_5$

DOPA - 5,10-dihydro-5,10-dioctylphenazine $R=C_8H_{17}$

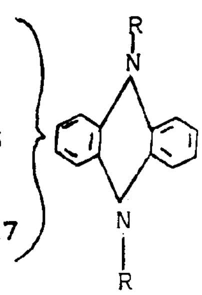

($R = C_{1-10}$alkyl)

TMPD - N,N,N′,N′-tetramethylphenylenediamine

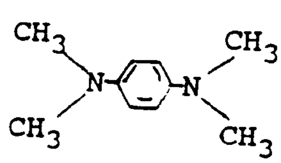

Npt

(c) benzidines:

TMBZ - N,N,N′,N′-tetramethylbenzidine

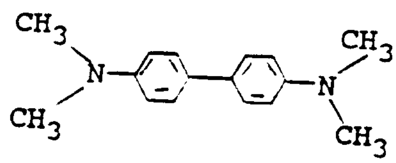

TTF - Tetrathiafulvalene

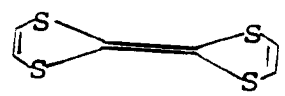

Preferred concentrations range from 0.01 to 0.05 molar, e.g. 0.02 to 0.03M. Most preferred is a .025 molar solution of 5,10-dihydro-5,10-dimethylphenazine (DMPA).

Numerous electrolytes can be used in the present invention. One which is often suggested for electrochemichromic cells and which is acceptable in the present invention is a tetrabutylammonium hexafluorophosphate. A 0.025 molar solutionis preferred.

UV stabilizers such as UVINUL™ 400, e.g. at approximately 1% weight by volume or greater (depending on the solubility limit) can also be used in the solutions of the present invention. As explained below, such UV stabilizers are more preferably used in connection with some of the solvents of the present invention than others.

Substantially any polyether both which is soluble in the electrochemichromic solution and can provide a composition whose viscosity permits vacuum backfilling of the electrochemichromic cell can be employed in the present invention. Particularly preferred polyethers include those of the polyethylene oxide type, (which preferably range in molecular weights from about 100,000 to about 4,000,000) and polycarbohydrates. The polyethers will preferably be used in the range of from 0.5 to 10% (w/v), based on total volume of the unthickened electrochemichromic solution. They may thus provide thickened solutions having viscosities in the range from 2 to 1850 centistokes. Preferably, the amount of polyether should be such as to provide a thickened solution having a viscosity at 25°C of not more than 600 centistokes for optimum vacuum backfilling results.

Suitable polyethers are characterised as those in which the repeating units of the polymer are linked by carbon to oxygen to carbon bonds (-C-O-C-) and include polyalkylene oxides, e.g. poly($C_{1-5}$alkylene) oxides such as polyethylene oxides, polypropylene oxides, poly(ethylene oxide-propylene oxide) copolymers, polytetramethylene oxides and also soluble polycarbohydrates such as cellulose derivatives, e.g. hydroxypropylcellulose and carboxymethylcellulose in which the repeating units are connected by the ether linkages (-C-O-C-), and mixtures thereof.

One of the best electrochemichromic solutions found for practising the invention comprises at least one of the previously described solvents, containing 0.025 molar ethylviologen hexafluorophosphate, 0.025 molar tetrabutylammonium hexafluorophosphate, 0.025 molar 5,10-dihydro-5,10- dimethylphenazine (DMPA) and 0.5-10% (w/v) of polyethylene oxides having molecular weights of 100,000; 600,000 and 4,000,000, and hydroxypropylcellulose having molecular weight of 100,000, and mixtures thereof.

A second aspect of the present invention relates to an electrochemichromic cell comprising at least two spaced apart substrates each having an inwardly facing conductive surface and an electrochemichromic solution of the first aspect located therebetween.

Thus preferably the invention also relates to an electrochemichromic cell comprising spaced plates, each having an inwardly facing conductive surface, an electrochemichromic solution located in the cell between the inwardly facing conductive surfaces, the solution comprising a solvent and a redox chemical pair in solution in

the solvent which colours in the presence of an applied voltage and which bleaches to a colourless condition in the absence of an applied voltage, the solvent being thickened by addition of at least one polyether which is soluble in the solvent.

The cell may be a mirror (such as a car or wall mirror) a window (such as a car window or window in a building) or a display (such as an information display).

A third aspect of the present invention relates to a method of manufacturing an electrochemichromic cell, the method comprising providing at least two spaced apart substrates each having an inwardly facing conductive surface and locating therebetween an electrochemichromic solution which comprises a solvent, a redox chemical pair whose colour can be varied by variation of an applied voltage (if any) and a polyether. Preferred features and characteristics of the second and third aspect are as for the first *mutatis mutandis*.

The invention will now be described by way of example with reference to the following Examples which are provided by way of illustration and are not to be construed as being limiting.

EXAMPLE A

Fig. 1 illustrates an electrochemichromic cell 1 into which solutions of the present invention are typically filled. Cell 1 comprises a pair of glass plates 10 and 11 each coated on its inwardly facing surface with a half wave indium tin oxide (ITO) coating 12 of about 15 ohms/square sheet resistance. Plates 10 and 11 are separated by peripheral seal 13 so that the interior of the cell has a thickness of 150 microns. cell 1 is sealed at its perimeter by peripheral seal 13. Seal 13 comprises an epoxy material, to which 150 micron diameter spacers are added, and silk-screened to a thickness of about 150 microns. Glass beads are used as spacers. As shown, the cell 1 is intended to be used as a mirror, and thus the rear surface of glass plate 11 is coated with a silver reflector layer 14. If the device were used as a window, layer 14 would be deleted. The conductive indium tin oxide layers 12 are connected to electrical terminals 15 and 16 so that a voltage can be established across a solution located between plates 10 and 11 in cell 1.

EXEMPLE 1 and COMPARATIVE EXAMPLES 2 and 3

The surprising effect of polyethers concerning their relatively low impact on current leakage can be seen by comparing solutions containing polyethylene oxide with solutions using the prior art thickener polymethyl methacrylate (PMMA). Figures 2 and 3 are graphs of leakage current (Amps/$m^2$) versus thickened solution viscosity.

The unthickened electrochemichromic solution comprised:

0.025M ethylviologen hexafluorophosphate
0.025M 5,10-dimethyl-5,10-dihydrophenazine
0.025M tetrabutylammonium hexaflurophosphate

dissolved in 3-hydroxypropionitrile (HPN) (comparative Example 2). As formulated, and as used in an electrochemichromic device as described above, and as illustrated in Figure 1, the viscosity of the unthickened solution was 3.5 centistokes and leakage current was 6 A/$m^2$. As shown by the diamond icons on Figure 2, and tabulated in Table 1, the leakage current remained substantially unaffected in spite of addition of 2% wt/vol 600,000 molecular weight PEO (Example 1) such that solution viscosity rose to 315 centistokes. By comparison to a prior art thickener, Figure 3 is a graph of leakage current (Amps/$m^2$) versus thickened solution viscosity for a formulation comprising:

0.025M methylviologen perchlorate
0.025M 5,10-dimethyl-5,10-dihydrophenazine
0.025M tetraethylammonium perchlorate

dissolved in propylene carbonate and thickened with varying concentrations of polymethylmethacrylate (90,000 molecular weight) (Comparative Example 3). As shown by the star icons on Figure 3 and as tabulated in Table 1, leakage current falls rapidly with even a modest increase in viscosity. For example, an increase in viscosity from 2 cst to 132 cst reduces leakage current from 7.2 A/$m^2$ to 4.4 A/$m^2$.

EXAMPLES 10, 13, 14, 16, 18, 20 and 22 and COMPARATIVE EXAMPLES 4 to 9, 15, 17, 19 and 21

The leakage current data given set forth herein was determined using electrochemichromic cell 1 (Fig. 1) with its rear surface mirrored as indicated above.

The leakage current data set forth in Table 1 was obtained by placing the various electrochemichromic solutions included in Table 1 within the 150 micron space between cell 1. Viscosity was determined using a conventional viscometer and test method. Indium-tin oxide transparent conductor coatings of 15 ohms/square

sheet resistance were used on the inwardly facing surfaces of the glass substrates that sandwiched the electrochemichromic solution. The mirror area in cell 1 was about 110 $cm^2$ for these measurements. Each solution comprised either 0.025 molar methylviologen perchlorate or 0.025 molar ethylviologen hexafluorophosphate as the cathodic colouring material, 0.025 molar 5,10-dihydro-5,10-dimethylphenazine as the anodic colouring material and 0.025 molar tetraethylammonium perchlorate or tetrabutylammonium hexafluorophosphate as the electrolyte.

TABLE 1

| Ex No. | Solvent & Thickener | Viologen | % Wt/Vol | Clear State % Refl. | Colored State % Refl. | Coloration Speed 70%-20% Seconds | Bleach Speed 10%-60% Seconds | Leakage Current A/M$^2$ | Viscosity 25° C. Centistokes |
|---|---|---|---|---|---|---|---|---|---|
| 4 | PC | $MVClO_4$ | 0% | 80.0 | 8.1 | 4.5 | 4.8 | 7.18 | 2.0 |
| 5 | PC + PMMA | $MVClO_4$ | 5% | 80.0 | 7.3 | 3.9 | 5.2 | 6.44 | 6.4 |
| 6 | | $MVClO_4$ | 10% | 80.8 | 6.9 | 4.3 | 6.0 | 5.65 | 25.3 |
| 7 | | $MVClO_4$ | 15% | 81.2 | 6.9 | 3.9 | 8.9 | 4.37 | 131.7 |
| 8 | | $MVBF_4$ | 25% | 62.5 | 6.2 | 4.2 | 8.6 | 3.0 | 1850 |
| 9 | HPN | $EVPF_6$ | 0% | 82.2 | 7.0 | 4.5 | 5.2 | 5.95 | 3.5 |
| 10 | HPN + PEO[a] | $EVPF_6$ | 2% | 73.6 | 6.7 | 3.3 | 5.5 | 6.09 | 13.8 |
| 11 | | $EVPF_6$ | 5% | 76.4 | 6.2 | 4.0 | 6.8 | 5.51 | 50.4 |
| 12 | | $EVPF_6$ | 10% | 76.6 | 5.7 | 3.9 | 9.5 | 4.64 | 500 |
| 13 | HPN + PEO[b] | $EVPF_6$ | 2% | 75.3 | 6.4 | 3.6 | 5.9 | 5.51 | 315 |
| 14 | HPN + PEO[c] | $EVPF_6$ | 1% | 74.8 | 6.2 | 4.3 | 6.0 | 4.73 | 498 |
| 15 | HPN | $MVClO_4$ | 0% | 83.3 | 8.2 | 3.7 | 5.4 | 6.73 | 3.5 |
| 16 | HPN + PEO[c] | $MVClO_4$ | 1% | 79.0 | 7.3 | 4.5 | 5.8 | 5.9 | 498 |
| 17 | HPN/GNT[d] | $MVClO_4$ | 0% | 83.5 | 7.7 | 4.4 | 4.5 | 5.2 | 4.1 |
| 18 | HPN/GNT+PEO[c] | $MVClO_4$ | 1% | 82.0 | 7.0 | 4.1 | 7.0 | 4.8 | 312 |
| 19 | HPN/ODPN[e] | $MVClO_4$ | 0% | 83.0 | 6.8 | 4.2 | 5.9 | 5.5 | 4.7 |
| 20 | HPN/ODPN+PEO[c] | $MVClO_4$ | 1% | 80.0 | 6.3 | 3.6 | 8.6 | 5.3 | 521 |
| 21 | GNT | $MVClO_4$ | 0% | 78.0 | 7.7 | 3.7 | 11.6 | 3.8 | 5.9 |
| 22 | GNT + PEO[c] | $MVClO_4$ | 1 | 78.9 | 7.7 | 3.4 | 9.4 | 3.3 | 295 |

a=Polyethyleneoxide; 100,000 mol. wt.

b=Polyethyleneoxide; 600,000 mol. wt.

c=Polyethyleneoxide; 4,000,000 mol. wt.

d=HPN/GNT 50/50 (v/v)

e=HPN/ODPN 50/50 (v/v)

The solvent was then varied as shown forth in column 1 of Table 1. Column 1 in Table 1 gives the solvents and the thickener added, column 2 gives the viologen used. Column 3 gives the concentration of thickener added in percent weight per volume. Percent wt/vol is the weight of thickener in grams dissolved in 100 ml of solvent. For example, a 1% wt/vol solution of polyethylene oxide in 3-hydroxypropionitrile (HPN) is formed by adding 1.0 gram of polyethylene oxide to 100 ml of 3-hydroxypropionitrile. Column 4 gives the % reflectivity at zero applied potential as measured at the centre of the electrochemichromic mirror device using a conventional reflectivity measurement means. Column 5 gives the % reflectivity reached when a potential of 1 volt is applied to fully colour these solutions. Column 6 lists the speeds of coloration, i.e., the time within which the reflectivity dropped from 70% to 20% when a potential of 1 volt was applied. Column 7 gives the speeds of bleach, i.e., time required to increase the reflectivity from 10% to 60% when zero potential is applied. Column 8 is the leakage current in amperes per square metre of cell area when the electrochemichromic solutions were filled into cell 1 as previously described and when fully coloured under 1 volt applied potential. Column 9 gives the solution viscosity, in centistokes.

Key for Table 1:

| | |
|---|---|
| PEO | = Polyethylene Oxide |
| PC | = Propylene Carbonate |
| HPN | = 3-HYdroxypropionitrile |
| PMMA | = Polymethylmethacrylate (Aldrich) Molecular Weight |
| ODPN | = 3, 3′-Oxydipropionitrile |
| $CLO_4$ | = Perchlorate |
| $PF_6$ | = Hexafluorophosphate |
| % wt/vol | = Wt (grams) of PEO or PMMA dissolved in 100 ml of solvent |
| GNT | = Glutaronitrile |
| $BF_4$ | = Tetrafluoroborate |
| HPC | = Hydroxypropylcellulose |

In Table 1, data is given for solutions based on the solvents propylene carbonate, 3-hydroxy-propionitrile, glutaronitrile and 1:1 (v/v) mixtures of 3-hydroxypropionitrile with 3,3′-oxydipropionitrile and glutaronitrile. The propylene carbonate solution was thickened with 5, 10, 15 and 25% weight/volume polymethylmethacrylate. 3-Hydroxypropionitrile was thickened with 1, 2, 5, and 10% weight/volume of polyethylene oxide of mol. wts. ranging from 100,000 to 4,000,000, and with hydroxypropylcellulose of 100,000 mol. wt. Also included in the Table 1 are solutions comprising HPN/ODPN and HPN/GNT (1:1 v/v) which were thickened with 1% w/v of PEO having 4,000,000 mol. wt.

As can be seen from the data (column 9), the addition of polymethylmethacrylate, polyethylene oxide and hydroxypropylcellulose to electrochemichromic solutions results in an increase in solution viscosity. Leakage current for unthickened propylene carbonate and 3-hydroxypropionitrile was 7.18 $A/m^2$ and 6.73 $A/m^2$, respectively, using methylviologen perchlorate. The data also shows that as one adds polymethylmethacrylate to thicken electrochemichromic solutions to overcome segregation effects and to achieve safety benefit, leakage current decreases dramatically in comparison to the significantly smaller decrease in leakage current which results from the addition of polyethers such as polyethyleneoxide or hydroxypropylcellulose, even though the use of these latter thickeners results in a more viscous solution. For example, a 15% PMMA solution of 132 cst viscosity in PC had a 4.37 $A/m^2$ (down about 40% from 7.18 $A/m^2$ for pure PC) whereas a 1% by weight PEO solution in HPN of greater viscosity (498 cst) has a leakage current of 5.9 $A/m^2$ which is only about 12% down from pure HPN (6.73 $A/m^2$).

Also, a similar trend was exhibited by the solutions containing ethylviologen and polyethylene oxide having molecular weight ranging from 100,000 to 4,000,000. For example, the solutions containing 100,000 mol. wt. (10% w/v and 500 cst) and 600,000 mol. wt. (2% w/v and 315 cst viscosity) PEO had leakage current of 4.64 $A/m^2$ and 5.51 $A/m^2$, respectively, which is only about 22% down from pure HPN (6 $A/m^2$) containing $EVPF_6$. The ability to thicken the solution without unduly decreasing leakage current is beneficial because as indicated in the data in Column 7, Table 1, a decrease in leakage current is accompanied by an increase in the time required to bleach the mirror. The ability to set the leakage current and also the bleach speed of a given device to desired values and then optionally thicken one solution used therein so as not to unduly disturb the selected leakage current and bleach speed is also beneficial.

Of course, it is understood that merely preferred embodiment of the invention have been given and that various changes and alterations can be made without departing from the spirit and broader aspects thereof.

**Claims**

1. An electrochemichromic solution comprising a solvent, a redox chemical pair whose colour can be varied by a variation of an applied voltage (if any) and a polyether.

2. A solution according to claim 1 comprising a redox chemical pair in solution in the solvent which colours in the presence of an applied voltage and which bleaches to a colourless condition in the absence of an applied voltage, the solvent being thickened by addition of an effective amount of at least one polyether.

3. A solution according to claim 1 or 2 wherein the polyether has a molecular weight of from 100,000 to 6,000,000 such as to 4,000,000.

4. A solution according to any of claims 1 to 3 in which the viscosity of the electrochemichromic solution is not greater than 600 centistokes at 25°C.

5. A solution according to any of claims 1 to 4 in which the polyether comprises polyethylene oxide and/or hydroxypropylcellulose suitably at from 0.5 to 10 percent weight by volume.

6. A solution according to any of claims 1 to 5 in which the solvent comprises 3-hydroxypropionitrile, 2-acetylbutyrolactone, glutaronitrile, 3,3′-oxydipropio-nitrile, 3-methylsulpholane, 2-methylglutaronitrile, propylene carbonate and/or a mixture thereof.

7. A solution according to any of claims 1 to 6 in which the redox chemical pair comprises of from 0.025 to 0.05 molar of methylviologen (suitably perchlorate) and/or ethylviologen (suitably hexafluorophosphate) and of from 0.025 to 0.05 molar 5,10-dihydro-5,10-dimethylphenazine.

8. An electrochemichromic cell comprising at least two spaced apart substrates each having an inwardly facing conductive surface and an electrochemichromic solution locating therebetween, the solution comprising a solvent, a redox chemical pair whose colour can be varied by variation of an applied voltage (if any) and a polyether.

9. An electrochemichromic cell according to claim 8 wherein the electrochemichromic solution is as claimed in any of claims 1 to 7.

10. An electrochemichromic cell according to claim 8 or 9 wherein the polyether has a molecular weight in the range of from 100,000 to 6,000,000.

11. A method of reducing segregation without unduly affecting leakage current in an electrochemichromic solution which comprises a solvent, a redox chemical pair in solution in the solvent which colours in the present of an applied voltage and which bleaches to a colourless condition in the absence of an applied voltage, the method comprising introducing into the solvent at least one polyether, such as having a molecular weight of from 100,000 to 4,000,000, which is soluble in the solvent.

12. A method of manufacturing an electrochemichromic cell, the method comprising providing at least two spaced apart substrates each having an inwardly facing conductive surface and locating therebetween an electrochemichromic solution which comprises a solvent, a redox chemical pair whose colour can be varied by variation of an applied voltage (if any) and a polyether.

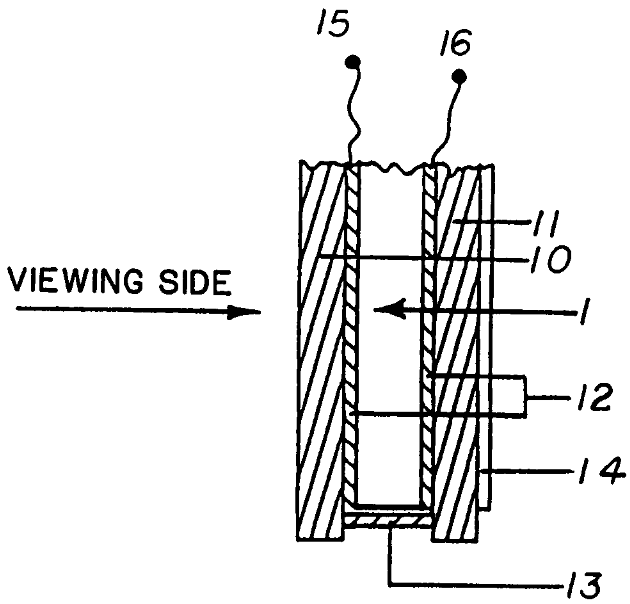


Fig 1

THE EFFECT OF VISCOSITY ON LEAKAGE CURRENT

POLYETHYLENE OXIDE(PEO) THICKENER IN 3-HYDROXYPROPIONITRILE(HPN)

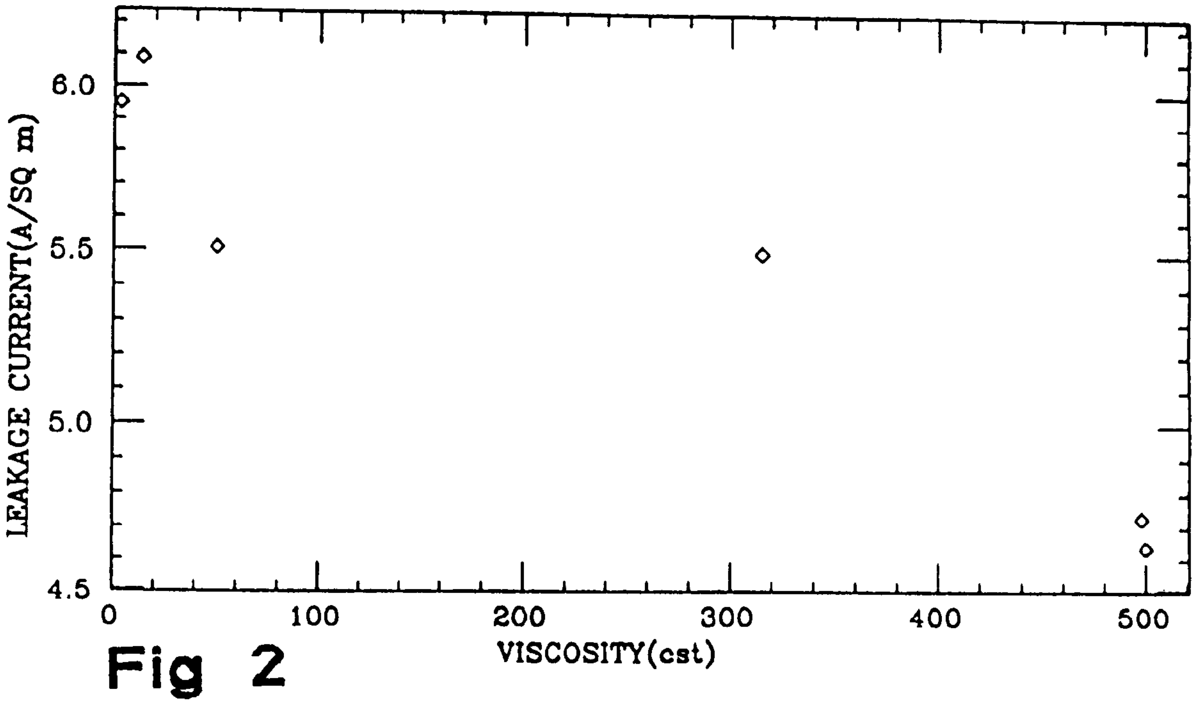


Fig 2

THE EFFECT OF VISCOSITY ON LEAKAGE CURRENT

POLYMETHYL METHACRYLATE THICKENER IN PROPYLENE CARBONATE

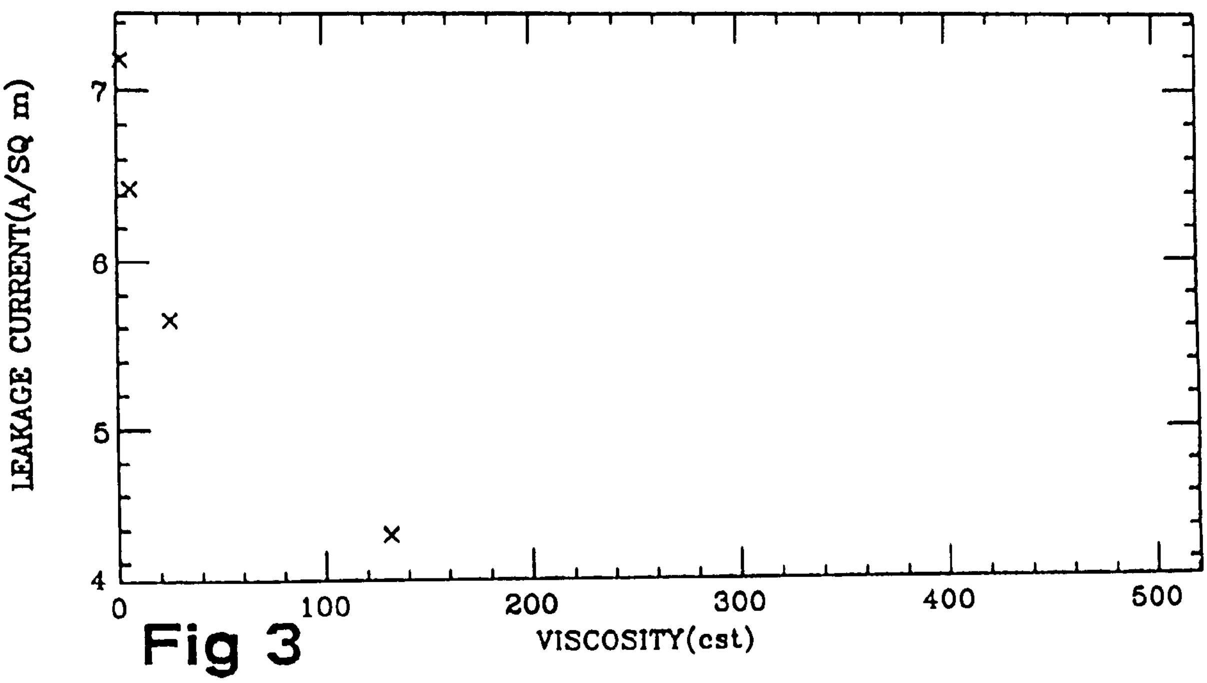


Fig 3